Europäisches Patentamt

European Patent Office

Office européen des brevets

(19)

(11) Veröffentlichungsnummer: **0 131 853**
**B1**

(12) # EUROPÄISCHE PATENTSCHRIFT

(45) Veröffentlichungstag der Patentschrift:
**31.01.90**

(21) Anmeldenummer: **84107824.9**

(22) Anmeldetag: **05.07.84**

(51) Int. Cl.⁴: **A 01 D 45/02**

(54) **Maiserntemaschine.**

(30) Priorität: **07.07.83 DE 3324458**

(43) Veröffentlichungstag der Anmeldung:
**23.01.85 Patentblatt 85/4**

(45) Bekanntmachung des Hinweises auf die Patenterteilung:
**31.01.90 Patentblatt 90/5**

(84) Benannte Vertragsstaaten:
**AT BE CH DE FR GB IT LI LU NL SE**

(56) Entgegenhaltungen:
**DE-A- 1 482 929**
**DE-A- 1 657 028**
**DE-A- 1 782 463**
**DE-A- 2 026 190**
**DE-U- 7 118 507**

(73) Patentinhaber: **Carl Geringhoff GmbH & Co KG,
Nordstrasse 54, D-4730 Ahlen (Westf.) (DE)**

(72) Erfinder: **Kalverkamp, Klemens, Possenbrock 29,
D-4730 Ahlen/Westf. (DE)**

(74) Vertreter: **Habbel, Hans-Georg, Dipl.-Ing.,
Postfach 3429 Am Kanonengraben 11, D-4400 Münster
(DE)**

**Beschreibung**

Die Erfindung bezieht sich auf eine Maiserntemaschine gemäß dem Oberbegriff des Hauptanspruches.

In der gattungsbildenden DE-A-16 57 028 wird ein zweiteiliger Erntemaschineneinsatz beschrieben und die beiden Teile dieses Erntemaschineneinsatzes können um je eine in Fahrtrichtung weisende Schwenkachse um 90° so gedreht werden, daß dadurch die Transportbreite der Maschine verringert wird. Die bekannte Anordnung hat den Nachteil, daß sie immer noch eine relativ große Transportbreite aufweist und daß vor allen Dingen die Sichtverhältnisse für den Fahrer erheblich eingeschränkt werden, insbesondere nach vorne und zur Seite hin.

Aus der DE-A-14 82 929 ist ein Mähdrescher bekannt, dessen Mähtisch dreiteilig ausgebildet ist. Um auch bei dieser bekannten Anordnung eine bequeme Transportbreite zu erreichen, ist eine komplizierte mehrteilige Gelenkanordnung vorgesehen, mit der die beiden Seitenteile an das Mittelteil anschließen. Trotz dieser aufwendigen Gelenkanordnung werden die beiden Seitenteile ebenfalls in vertikaler Richtung aufrechtstehend vor dem Fahrerhaus angeordnet, so daß auch bei dieser Einrichtung die Sichtverhältnisse stark eingeschränkt sind.

Der Erfindung liegt die Aufgabe zugrunde, eine Maiserntemaschine zu schaffen, die einerseits im Verhältnis zu bekannten Maschinen eine erheblich größere Leistung erbringt und andererseits die der Leistungssteigerung entgegenstehenden Schwierigkeiten und Nachteile vermeidet, in der Transportstellung gute Sichtverhältnisse gewährleistet und trotzdem einfach aufgebaut ist.

Eine Lösung der gestellten Aufgabe gelingt bei einer Maschine mit den Merkmalen des Hauptanspruches.

Dadurch, daß der Maschinenrahmen an beiden äußeren Trennstellen im Bereich seiner Oberseite je ein Gelenk mit einer in Arbeitsrichtung weisenden Schwenkachse aufweist, an dem ein freitragendes Seitenteil mit Pflückspalt klappbar angelenkt ist, wird mit Vorteil ein relativ großer Schwenkradius der im Bereich der Trennstellen ineinandergreifenden Antriebsorgane erreicht, wodurch eine unkomplizierte Anordnung von Klauenkupplungen an den Trennstellen dieser Antriebsorgane möglich wird. Die Klappbarkeit der Seitenteile um jeweils ein Gelenk mit in Arbeitsrichtung weisender Schwenkachse erreicht mit Vorteil, daß beim Klappvorgang keine Veränderung der Schwerpunktlage der Maschine eintritt.

Weiter wird vorgeschlagen, daß das Gelenk einen, vorzugsweise dreieckigen, Tragarm aufweist, der in einer am Maschinenrahmen befestigten Hülse mit einem darin geführten Bolzen schwenkbar aufgenommen ist.

Als Vorteil ergibt sich mit dieser Anordnung eine kompakte, unkomplizierte Ausgestaltung des klappbaren Rahmenteils. Diese Ausgestaltung verleiht dem Gelenk die genügende Verwindungssteifigkeit, um die nach vorne ausladenden Maschinenteile abzufangen und deren Kräfte in den Maschinenrahmen einzuleiten.

Weiter ist vorgesehen, daß die Gelenke gegenüber der Lage der Trennstellen zur Maschinenmitte hin versetzt angeordnet sind. Hierdurch wird der Vorteil erreicht, daß erstaunlicherweise ein Schwenkbereich von ca. 130° bereits genügt, um die Seitenteile in das straßengängige Profil der Maschine hereinzuschwenken.

Weiter ist vorgesehen, daß die Seitenteile als tragende Elemente im wesentlichen den mit dem Gelenk verbundenen Tragarm und einen weiteren zu diesem parallelen, vorzugsweise darunter liegenden Tragarm und ein äußeres Seitenteil aufweisen, das die Tragarme an der dem Gelenk gegenüberliegenden Seite verbindet. Hierdurch wird mit Vorteil eine kompakte und funktionell sichere Ausbildung der klappbaren Seitenteile erreicht, die mit ausreichender Steifigkeit den Maschinenrahmen nach außen fortsetzen, so daß weitere schwere Teile darauf angeordnet werden können.

Weiter ist vorgesehen, daß die Maiserntemaschine zum Klappen der Seitenteile Antriebe aufweist, die einerseits an den Tragarmen und andererseits am Mittelteil des Maschinenrahmens angelenkt sind. Diese Ausbildung befreit den Maschinenbediener vorteilhaft von schwerer körperlicher Arbeit. Die Seitenteile können somit maschinell bewegt werden.

Vorzugsweise sind die Antriebe Hydraulik-Kolben/Zylinder Einheiten. Dabei handelt es sich um bewährte, robuste und funktionssichere Antriebselemente, die sich für den rauhen Betrieb einer Erntemaschine bestens eignen.

Weiter ist vorgesehen, daß die Maiserntemaschine zum Transport des Maisgutes eine Schnecke mit Mittenabwurf aufweist, die getrennt ist und an den Trennstellen in einen mittleren und zwei seitliche Schneckenteile geteilt ist. Diese Ausbildung erlaubt es, auch den auf den freitragenden Seitenteilen angeordneten Pflückspalten Teile der Schnecke zuzuordnen und das Erntegut zur Mitte hin zu transportieren.

Dabei wird vorgeschlagen, daß ein äußeres Schneckenteil mit einem Antrieb, vorzugsweise außenliegenden Kettenantrieb, zu einer Vorgelegewelle versehen ist und das mittlere Schneckenteil sowie das andere seitliche Schneckenteil in Arbeitsstellung über Klauenkupplungen mit antreibt. Hierdurch wird mit Vorteil ein sehr unkomplizierter und leicht zu wartender Antrieb erreicht, ohne daß der Quertransport des Erntegutes durch Zwischenantriebe behindert werden könnte. Auch das seitlich des Maschinenrahmens im Bereich der klappbaren Seitenteile geerntete Gut kann somit vorteilhaft über die Trennstellen hinweg in einen einzigen zentral liegenden Abwurfschacht transportiert werden.

Sinngemäß zu dieser Ausgestaltung ist weiter vorgesehen, daß die Einzugswalzen von einer Vorgelegewelle über Nebenantriebe angetrieben sind, wobei auch die Vorgelegewelle im Bereich der Trennstellen geteilt ist, und die Wellenteile in Arbeitsstellung über Klauenkupplungen miteinander im Eingriff stehen. Dadurch wird vorteilhaft erreicht, daß auch auf den Seitenteilen weitere Pflückspalte angeordnet werden können.

Weiter ist vorgesehen, daß die Anzahl der, die Klauenkupplungen bildenden, exzentrisch angeordneten Antriebsklauen und exzentrisch angeordneten Abtriebsklauen gleich der Gangzahl der Schnecke ist. Dies bewirkt vorteilhaft, daß unabhängig von der momentanen Stellung der Schneckenteile zum Zeitpunkt des Kuppelns, sich beim Betrieb immer die gleiche Winkelstellung der Schneckenteile zueinander einstellt. Die Förderwirkung der Schnecke bleibt erhalten; ungünstige Winkelstellungen werden vermieden.

In weiterer Ausgestaltung der Klauenkupplung ist vorgesehen, daß die Klauen als zur Achse geneigte Bolzen ausgebildet sind, die insbesondere unter einem Winkel $\alpha$ von etwa 10° zur Längsachse angeordnet sind, so daß sich unter Belastung eine die Wellenteile zusammenfügende Kraft einstellt. Erstaunlicherweise bleiben die Klauen durch diese Ausbildung auch bei Fluchtungsungenauigkeiten der Wellen, wie sie durch elastische Formänderungen im rauhen Betrieb auftreten, immer im Eingriff. Störungen treten nicht auf. Die Kupplung verriegelt sich quasi kraftschlüssig selbsttätig.

In weiterer Ausgestaltung der Klauenkupplung ist vorgesehen, daß ein Kupplungsende als zentraler Bolzen und das andere als Buchse aufsteckbar ausgebildet sind, so daß sie sich gegenseitig zentrieren. Dadurch werden beim Ausklappen der Seitenteile bereits zwangsweise die Wellen zentriert, und die sichere Funktion der Kupplungen bleibt unter allen Betriebsbedingungen erhalten.

In weiterer Ausgestaltung der Maiserntemaschine ist vorgesehen, daß der Maschinenrahmen zu beiden Seiten je einen, die Trennstelle sichernden Riegel aufweist. Der Riegel verhindert das unbeabsichtigte Öffnen der Trennstelle unter Last, wie es beispielsweise durch Fehlbedienung oder beim Betrieb durch Auflaufen auf Bodenunebenheiten bzw. Auffedern denkbar ist.

In Ausgestaltung des Riegels ist vorgesehen, daß der Riegel an einer, vorzugsweise motorisch angetriebenen, axialbeweglichen Stange einen schwenkbeweglich angelenkten Keil aufweist. Vorteilhaft wird somit eine zentrale Verriegelungsmöglichkeit geschaffen. Ein Kraftbetätigungselement reicht aus, beide Seitenteile zu verriegeln.

Es ist weiter vorgesehen, daß das Seitenteil eine Verriegelungsfläche aufweist, auf die der Keil geführt von einer zweiten Fläche gepreßt wird. Die am Maschinenrahmen angebrachte Führungsfläche lenkt den schwenkbeweglichen Keil aus der axialen Bewegungsrichtung in die verriegelnde Lage um. In Verbindung mit der keilförmigen Ausbildung des Riegels ergibt sich somit eine sichere und spielfreie Fixierung.

Weiter ist vorgesehen, daß die verriegelnde Fläche des Keils eine Neigung $\beta$ zur Tangente eines im Berührungspunkt um die Schwenkachse des Seitenteils gedachten Kreises aufweist. Diese Anordnung der Flächen bildet einen Hintergriff, durch den das Seitenteil in seiner Position gehalten wird.

Hierbei ist in weiterer vorteilhafter Ausgestaltung vorgesehen, daß die die Trennstelle überdeckende Einlaufspitze mit der äußeren Längskante in Scharnieren an dem Seitenteil angelenkt ist. Dabei ergeben sich mit Vorteil relativ unkomplizierte kinematische Anordnungen, die sowohl eine problemlose Klappfunktion als auch eine wirtschaftliche Herstellung ermöglichen. Die am hochklappbaren Seitenteil freihängende Einlaufspitze wird beim Runterklappen von der Schwerkraft in ihre Betriebslage gebracht. Komplizierte Führungs- oder Federelemente entfallen.

Dabei ist sowohl im Interesse einer unkomplizierten Wartung und Maschinenpflege als auch einer raschen Umrüstung von der Arbeitsstellung in die Transportstellung weiter vorgesehen, daß die Einlaufstützen in bekannter Weise zweiteilig und aufstellbar ausgebildet sind und Mittelgelenke aufweisen, die bei aufgestellter Stellung ein Anlegen beider Teile aneinander ermöglichen.

Für eine rasche Zugänglichkeit von Antriebs- und Arbeitselementen ist von Vorteil, daß die Einlaufspitzen auch in gestreckter Form aufklappbar ausgebildet sind.

Für die Ausrüstung der Maschine mit Unterbau-Strohhäckslern sieht eine vorteilhafte Ausbildung vor, daß die Antriebe dieser Unterbau-Strohhäcksler vorzugsweise über Nebenantriebsaggregate von der zentralen Antriebswelle angetrieben sind.

Eine sehr vorteilhafte Leistungssteigerung in einer Größenordnung von wenigstens 50% wird dadurch erreicht, daß die Maschine sechs Pflückspalte aufweist, von denen vier im Mittel- und je einer an den klappbaren Seitenteilen angeordnet sind.

Und schließlich sieht eine weitere Ausbildung der Maiserntemaschine vor, daß die Bedienung der Klappeinrichtung von der Fahrerkabine aus durch einen Schalter, vorzugsweise einen Druckknopfschalter, erfolgt. Der sich hieraus ergebende Bedienungskomfort ist vorteilhaft bei der Umstellung von der Arbeitsstellung in die Transportstellung.

Die Erfindung wird in Zeichnungen in einer bevorzugten Ausführungsform gezeigt, wobei aus den Zeichnungen weitere vorteilhafte Einzelheiten der Erfindung entnehmbar sind.

Die Zeichnungen zeigen im einzelnen:

Fig. 1 eine Maiserntemaschine in Frontansicht, mit in unterschiedliche Stellungen geklappten Einlaufspitzen,

Fig. 1a die in Fig. 1 dargestellte Maschine mit unterschiedlichen Stellungen der mittleren Einlaufspitzen, in Seitenansicht,

Fig. 1b die in Fig. 1 dargestellte Maschine mit unterschiedlichen Stellungen der seitlichen Einlaufspitzen, in Seitenansicht,

Fig. 2 eine Frontansicht der Maiserntemaschine mit einem hochgeklappten Seitenteil,

Fig. 3 eine Draufsicht auf das in Fig. 2 hochgeklappte Seitenteil,

Fig. 4 eine Darstellung der Lagerung und der Klauenkupplung zweier Schneckenwellenteile an einer Trennstelle,

Fig. 5 eine Darstellung der Verriegelungsanordnung an einer Trennstelle in verriegelnder Position,

Fig. 6 eine Darstellung einer Verriegelungsanordnung an einer Trennstelle in entriegelter Position und

Fig. 7 eine Darstellung der Anlenkung einer die Trennstelle überdeckende Einlaufspitze an einem hochgeklappten Seitenteil.

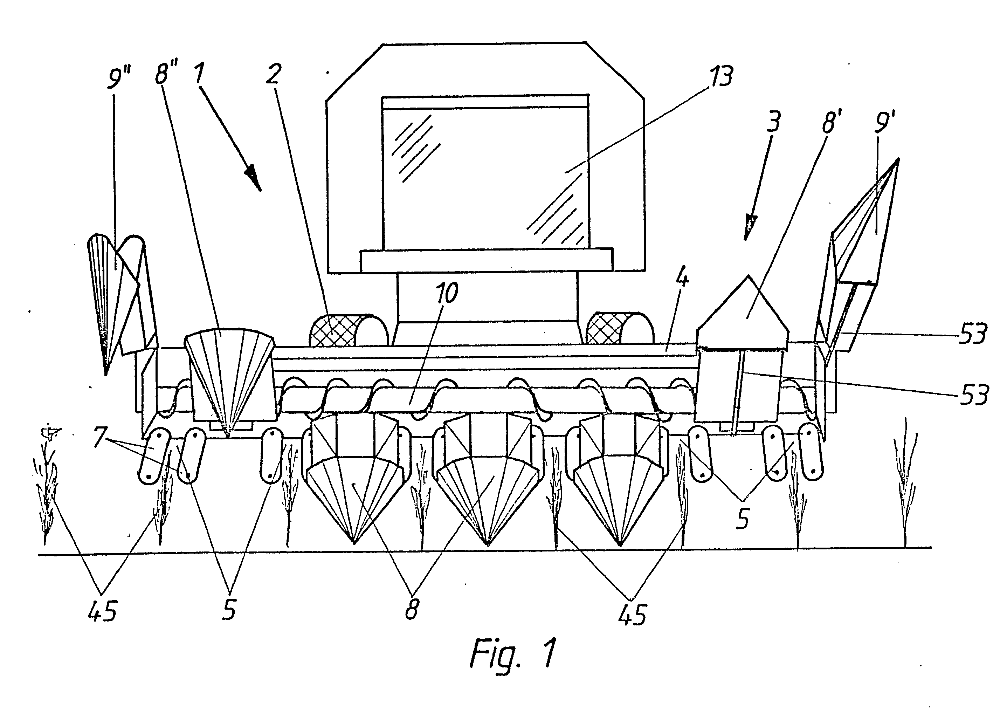

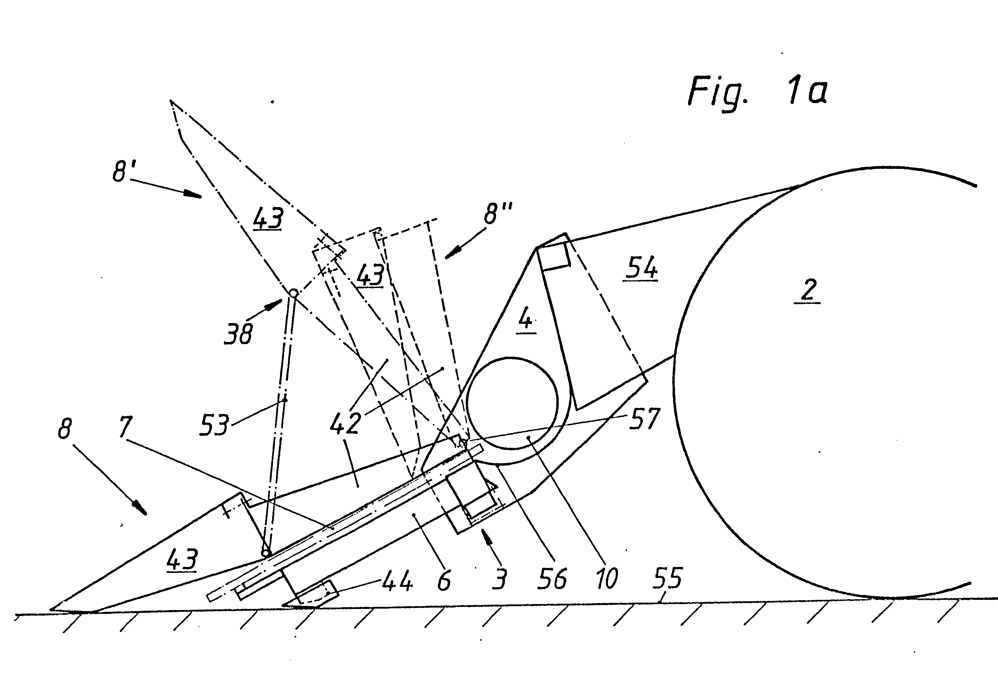

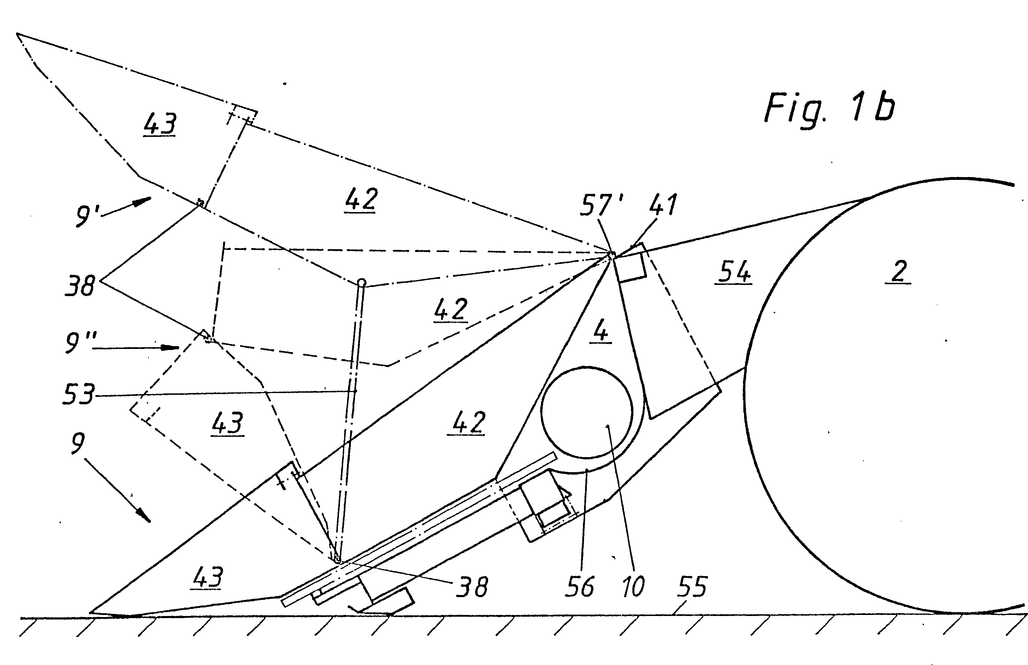

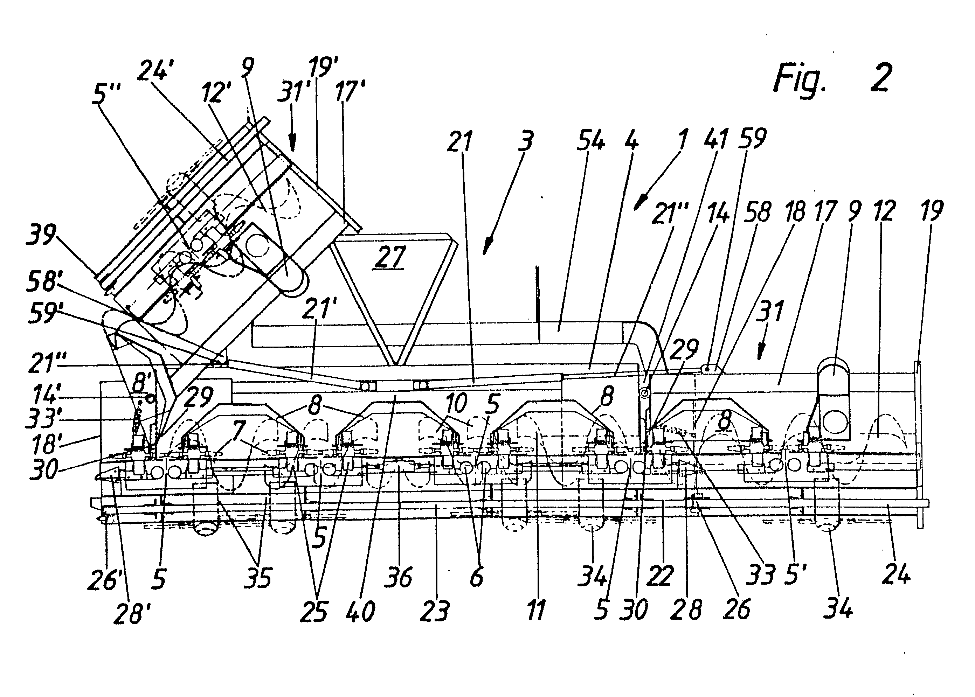

Die Maiserntemaschine 1 in Figur 1 ist ein sogenannter Selbstfahrer mit einem Fahrzeug 2 und dem als Vorsatzgerät daran angebauten Erntemaschineneinsatz 3. Dieser weist einen kompakten Maschinenrahmen 4 auf, der zur Aufnahme aller Funktionselemente der Maiserntemaschine 1 dient. Diese ist im gezeigten Ausführungsbeispiel mit sechs Pflückspalten 5 ausgebildet. Zu beiden Seiten von diesen sind paarweise Einzugswalzen 6 (Fig. 2) und Transportkettenpaare 7 angeordnet. Zwischen jeweils zwei Pflückspalten 5 sind Einlaufspitzen 8, 8', 8'' und an den Außenseiten der Maschine schmalere seitliche Einlaufspitzen 9, 9', 9'' angeordnet. Der Abstand der Pflückspalte 5 untereinander entspricht demjenigen der Pflanzenreihen 45. In der Darstellung sind die drei mittleren Einlaufspitzen 8 heruntergeklappt in Arbeitsstellung gezeigt, während die vom Blickpunkt des Betrachters rechts gezeigte Einlaufspitze 8' in gestreckter Form aufgeklappt und wie eine Motorhaube von einer Stütze 53 gehalten ist. In dieser Stellung sind die zu wartenden Maschinenteile mühelos zugängig. Ebenfalls in gestreckter Form aufgeklappt ist die seitliche Einlaufspitze 9' dargestellt. Auch sie wird in dieser Lage von einer Stütze 53 gehalten und ermöglicht ein ungehindertes Arbeiten an den offengelegten Maschinenteilen. Die linksseitig dargestellt Einlaufspitze 8'' ist in Transportstellung aufgestellt, wobei die beiden durch ein Mittelgelenk 38 verbundenen Teile 42 und 43 (Fig. 1a) aneinander angelegt sind. Ebenfalls in Transportstellung ist die linke seitliche Einlaufspitze 9'' gezeigt. In der Darstellung ist weiterhin die Anordnung der Transportschnecke 10 sowie die Fahrerkabine 13 erkennbar.

Figur 1a zeigt in Seitenansicht und in schematischer Darstellung die drei möglichen Stellungen der mittleren Einlaufspitzen. Dabei bezeichnet Ziffer 8 die Arbeitsstellung, Ziffer 8' die gestreckte Montage- und Wartungsstellung und Ziffer 8'' die Transportstellung. Am Vorsatzrahmen 54 des rein schematisch dargestellten Fahrzeuges 2 ist der Maschinenrahmen 4 mit dem Erntemaschineneinsatz 3 als Vorsatzgerät angelenkt. Von einem Gleitschuh 44 abgestützt, bewegen sich dicht oberhalb des Feldbodens 55 die Einzugswalzen 6 und unmittelbar oberhalb derselben, mit diesen zusammenwirkend, die Transportketten 7. Diese transportieren das Pflückgut in die Mulde 56 der Transportschnecke 10. Die Einlaufspitzen weisen je ein unteres Teil 42 und ein oberes Teil 43 auf. Beide Teile sind durch ein Mittelgelenk 38 verbunden. Dieses ermöglicht es, die beiden Teile 42, 43 in der Transportstellung 8'' aneinander anzulegen, bzw. in Montage- und Wartungsstellung in gestreckter Form 8' aufzuklappen, wobei die Teile dann um das Grundgelenk 57 schwenken. Dabei dient die Stütze 53 dem Halt in der gestreckten Position.

Entsprechend den Stellungen der mittleren Einlaufspitzen in Figur 1a sind Stellungen der seitlichen Einlaufspitzen in Figur 1b gezeigt. Mit Ziffer 9 ist die seitliche Einlaufspitze in Arbeitsstellung bezeichnet, mit Ziffer 9' in gestreckter Montage- und Wartungsstellung und mit 9'' in Transportstellung. Auch die seitlichen Einlaufspitzen besitzen Mittelgelenke 38 und sind mit jeweils zwei Teilen 42, 43 ausgebildet. Sowohl die mittleren Einlaufspitzen 8, 8', 8'' als auch die seitlichen Einlaufspitzen 9, 9', 9'' sind jeweils mit einem Grundgelenk 57, 57' am Maschinenrahmen 4 angelenkt. Dabei liegen die Grundgelenke 57 der Mittelspitzen dicht oberhalb der Transportkettenpaare 7, während die Grundgelenke 57' der seitlichen Einlaufspitzen 9 in Höhe der Maschinenrahmen-Oberseite 41 angeordnet sind.

In der Frontansicht der Figur 2 ist eine Maiserntemaschine 1 mit – vom Betrachter aus gesehen – linksseitig hochgeklapptem Seitenteil 31' und rechtsseitig mit dem Seitenteil 31 in Arbeitsstellung gezeigt. Das hochgeklappte Seitenteil 31' stützt sich in dieser Stellung auf dem Auflagebock 27 ab. Die Verriegelung in dieser Stellung erfolgt mit Hilfe der Hydraulik-Kolben/Zylinder-Einheit 21', welche nach Einfahren der Kolbenstange 21'' in dieser Stellung blockiert ist. Die Hydraulik-Kolben/Zylinder-Einheit 21 ist mittig am Mittelteil 40 des Maschinenrahmens 4 gelenkig angeordnet und greift am Tragarm 17, 17' eines jeden Seitenteiles 31, 31' an einem zwischen Laschen 58, 58' angeordneten Gelenk 59, 59' an. Die beiden Seitenteile 31 und 31' sind in den Gelenken 14, 14' klappbar angeordnet. Diese Gelenke liegen in Höhe der Maschinenrahmen-Oberseite 41. Sie sind zudem gegenüber der Lage der Trennstellen 18 und 18' nach innen zurückversetzt. Durch diese Anordnung der Gelenke 14, 14' ergibt sich für das Ineinandergreifen der Klauenkupplungen 26, 26' durch den relativ großen Schwenkradius ein annähernd lineares Ineinandergreifen. Das gleiche gilt für die in der Zeichnung nicht ersichtlichen Klauenkupplungen 37, 37' der Transportschnecke 10. Dadurch, daß die Gelenke 14, 14' nach innen versetzt sind, wird bei einer Schwenkung der Seitenteile 31, 31' um einen Winkelbetrag von ca. 130° erreicht, daß auch die Unterkante 39 des hochgeklappten Seitenteiles 31' nicht über die senkrechte Projektion der Trennstelle 18' übersteht. Dies ist für das Transport-Profil ein wesentlicher Vorteil.

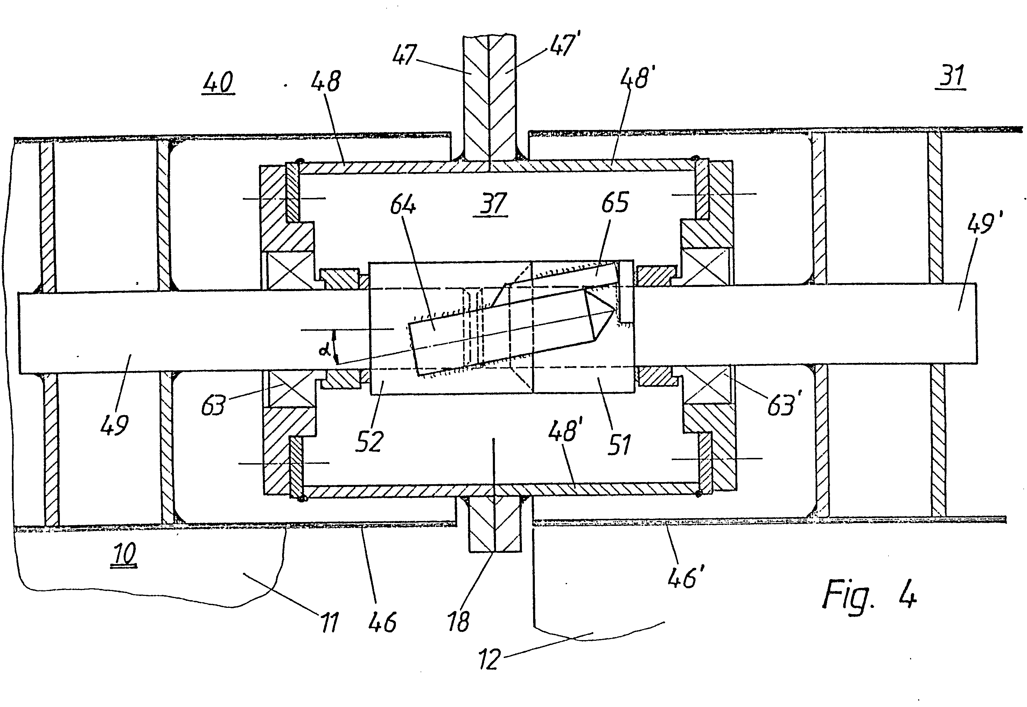

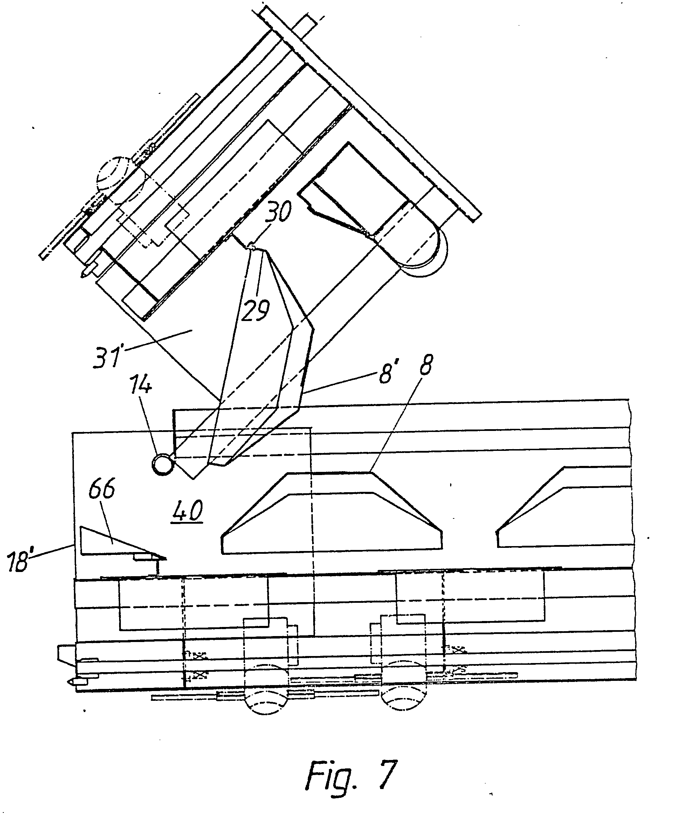

Weiter zeigt Figur 2 die ebenfalls hochgeklappte Einlaufspitze 8', die mit ihrer inneren, unteren Längskante 29 im Scharnier 30 am Maschinenrahmenteil 40 angelenkt und mit dem hochgeklappten Seitenteil 31' durch den federnden Lenker 33' verbunden, ebenfalls hochklappbar angeordnet ist. Dies ist wichtig, da die Einlaufspitze 8' die Trennstelle 18' in Arbeitsstellung überdeckt. Eine andere vorteilhafte Anordnung zur Anlenkung der Einlaufspitze wird in Fig. 7 weiter unten beschrieben. Weiter zeigt Figur 2 die Pflückspalten 5 im Mittelteil 40 des Maschinenrahmens 4 sowie die Pflückspalten 5', 5'' in den Seitenteilen 31 und 31'. Daraus ergibt sich, daß die Maschinenbreite bei hochgeklappten Seitenteilen 31, 31' derjenigen einer Standardmaschine mit vier Pflückspalten entspricht, während in Arbeitsstellung die Maschinenbreite um 50% verbreitert ist. Folglich ist auch die Leistung der Maschine gegenüber einer solchen mit vier Pflückspalten um 50% bei gleicher Pflückgeschwindigkeit vergrößert. Beiderseits der Pflückspalten 5, 5' sind paarweise die Einzugs-Walzen 6 angeordnet. Dicht oberhalb derselben befinden sich ebenfalls paarweise die Transportketten 7. Sowohl die Walzen 6 als auch die Ketten 7 sind durch Nebenantriebe 25 von einer zentralen Vorgelegewelle 22 angetrieben. Eine Nebenantriebswelle 36 verbindet paarweise die Antriebe 25 einzelner Transportketten 7 bzw. Walzen 6. Über die gesamte Breite des Maschinenrahmens 4 einschließlich der Seitenteile 31, 31' erstreckt sich die Transportschnecke 10. Sie ist an den Trennstellen 18, 18' in einen mittleren Transportschneckenteil 11 sowie zwei seitliche Transportschneckenteile 12, 12' geteilt. An den Trennstellen 18, 18' greifen diese Schneckenteile 11, 12 mittels Klauenkupplungen 37, 37' ineinander, wie nachfolgend in Figur 4 noch zu erläutern. Am Unterteil des Maschinenrahmens 4 einschließlich der Seitenteile 31, 31' sind von Nebenantrieben 35 angetriebene Häcksler 34, sogenannte Unterbodenstrohschläger, angeordnet. Auch deren Antrieb erfolgt über die zentrale Antriebswelle 22; dabei ist es von Vorteil, daß der Wellenteil 23 mit Antrieben, beispielsweise Hydraulikmotoren, ausgestattet ist, während die äußeren Wellenteile 24, 24' von dem mittleren Wellenteil 23 über die Klauenkupplungen 26, 26' angetrieben werden. Dadurch verringert sich das Gewicht der in Arbeitsstellung freitragenden Seitenteile 31, 31'. Der Antrieb der Transportschnecke 10, erfolgt einseitig über eines ihrer Teile 12 oder 12', das mit einem Antrieb (nicht gezeigt), vorzugsweise einem außenliegenden Kettenantrieb zur Vorgelegewelle, ausgestattet, die übrigen Schneckenteile 11 und 12 oder 12' über Klauenkupplungen 37, 37' antreibt. Dadurch vereinfacht sich die Konstruktion der Welle und das Antriebsaggregat ist für Wartungszwecke leichter zugänglich. Die Seitenteile 31, 31' sind von Tragarmen 17, 17' aufgenommen, die ihrerseits in den Gelenken 14, 14' an den Mittelteil 40 des Maschinenrahmens 4 angelenkt sind. Den äußeren Abschluß bilden Außenteile 19, 19' in Form von stabilen Rahmen 62, 62'.

In der Arbeitsstellung sind die Seitenteile 31, 31' durch Verriegelungen 28, 28' in ihrer Position festgelegt.

Das Hoch- bzw. Zurückklappen der Seitenteile 31, 31' erfolgt von der Fahrerkabine 13 mit Hilfe eines Hydraulikschalters, der vorzugsweise mit Druckknopfbedienung ansteuerbar ist. Dabei werden zuerst die Verriegelungen 28, 28' entriegelt. Sodann werden die Hydraulik-Kolben/Zylinder-Einheiten 21, 21' von Hydrauliköl beaufschlagt und beginnen mit dem Einfahren der Kolbenstangen 21''. Dadurch werden die Tragarme 17, 17' und mit diesen die Seitenteile 31, 31' um die Gelenke 14, 14' verschwenkt und dabei hochgeklappt. Am Ende der Schwenkbewegung erreichen die Seitenteile 31, 31' die Anlagestellung am Auflagebock 27. In dieser Stellung ist die Breite des Erntemaschineneinsatzes 3 auf ein Maß verkürzt, das dem gegenseitigen Abstand der Trennstellen 18, 18' entspricht. Dadurch, daß beide Seitenteile 31, 31' gleichmäßig – synchron hochgeklappt werden, wird eine Änderung der Schwerpunktslage in Arbeitsrichtung vermieden. Während des Hochklappens der Seitenteile 31, 31' werden die die Trennstellen 18, 18' überdeckenden Einlaufspitzen 8, 8' ebenfalls hochgeklappt.

Fig. 2 zeigt eine von Fig. 7 abweichende Anlenkung der Einlaufspitzen, bei der diejenigen Einlaufspitzen, die die Trennstellen überdecken, mit ihren inneren, unteren Längskanten 29 mit dem Gelenk 30 am feststehenden Mittelteil 40 des Maschinenrahmens 4 angelenkt sind und über die federnden Lenker 33, 33' mit den Seitenteilen 31, 31' in kinematischer Verbindung stehen.

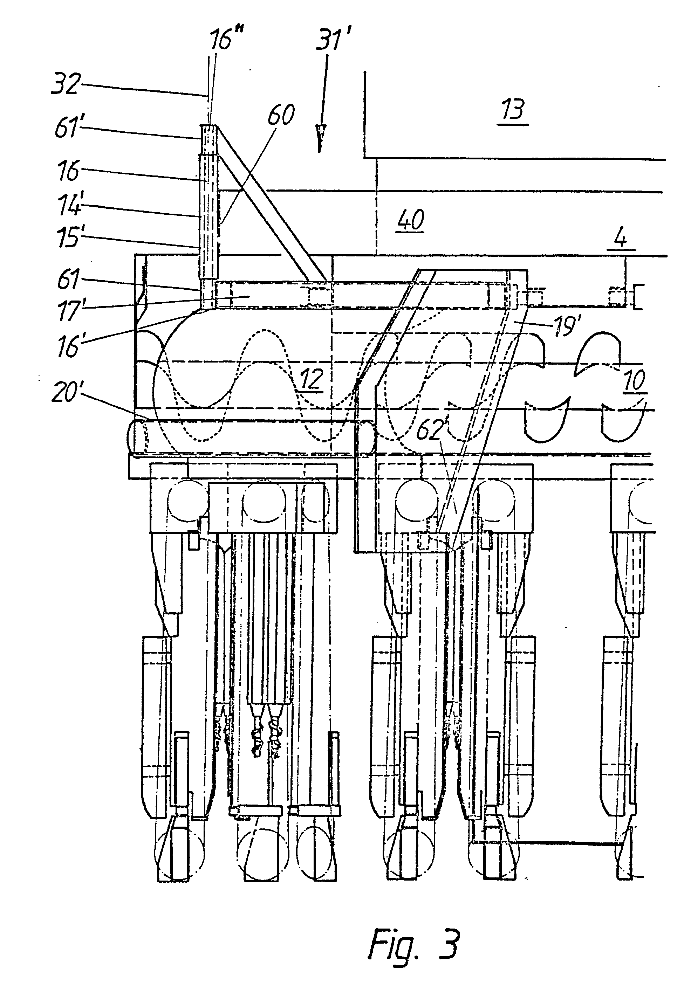

In Fig. 3 ist die gleiche Maschine wie in Fig. 2 dargestellt, jedoch aus der Draufsicht auf ein hochgeklapptes Seitenteil 31'. Gleiche Teile sind mit gleichen Bezugsziffern bezeichnet. Die Draufsicht verdeutlicht sehr anschaulich die Lage der Funktionselemente und die Position des Seitenteiles 31' in hochgeklappter Stellung. Bei dem linksseitig dargestellten hochgeklappten Seitenteil 31' ist die Ausbildung des Gelenks 14' erkennbar. Dieses weist die Hülse 15' auf, die mit dem Mittelteil 40 des Maschinenrahmens 4 beispielsweise durch eine Schweißnaht 60 fest verbunden ist. Darin befindet sich der Bolzen 16, an dessen beiden Enden 16', 16'' der dreieckige Tragarm 17' mit den Gelenkbuchsen 61, 61' schwenkbar angeordnet ist. Am Ende des Tragarms 17' ist das Außenteil 19' befestigt. Dieses ist als starrer Rahmen 62' ausgebildet und nimmt seinerseits den Tragarm 20' auf.

Der Dreieckige Tragarm 17', das Außenteil 19' und der Tragarm 20' bilden die tragenden Elemente des hochklappbaren Rahmenteils im Seitenteil 31'. Diese dienen zur Aufnahme der Funktions- und Arbeitselemente im Bereich der Pflückspalte des klappbaren Seitenteils 31' sowie zur Aufnahme und Lagerung des seitlichen Teils 12 der Transportschnecke 10. Das Gelenk 14', dessen Lage im Mittelteil 40 des Maschinenrahmens 4 aus Figur 2 hervorgeht, weist im übrigen eine im wesentlichen horizontale sowie in Arbeitsrichtung verlaufende Schwenkachse 32 auf.

Die Draufsicht gemäß Fig. 3 dient im übrigen in Zusammenhang mit der Frontansicht gemäß Figur 2 einer besseren Veranschaulichung der Maiserntemaschine nach der Erfindung. Da in beiden Figuren übereinstimmende Funktionselemente mit gleichen Bezugszeichen kenntlich gemacht sind, bedarf es für die übrigen Teile der Darstellung in Figur 3 keiner weiteren Erläuterungen.

Figur 4 zeigt an der Trennstelle 18 eine den Mittelteil 40 des Maschinenrahmens 4 abschließenden Träger 47 und einen Träger 47', der dem klappbaren Seitenteil 31 zugeordnet ist. Der Träger 47 nimmt einen Teil des Lagergehäuses 48 mit dem Lager 63 auf. In diesem ist ein zentraler Bolzen 49 drehbar gelagert, auf den sich die rohrförmige Welle 46 des mittleren Teiles 11 der Schnecke drehbar abstützt.

In analoger Weise nimmt der Träger 47' den ergänzenden Teil des Lagergehäuses 48' auf. Der zentrale Bolzen 49', auf den sich die rohrförmige Welle 46' des seitlichen Teiles 12 der Schnecke abstützt, ist mittels Lager 63' in dem Lagergehäuse 48' koaxial durch den zentralen Bolzen 49' gelagert.

Der zentrale Bolzen 49' ist mit einer Nabe 51 drehfest·verbunden, und der über die Nabe hinausstehende Bolzenteil stützt sich innerhalb des Nabengegenstücks 52 ab, das mit dem anderen zentralen Bolzen 49 ebenfalls drehfest verbunden ist. Der Momentenschluß erfolgt von Leiste 65, die auf der Nabe 51 angeordnet ist auf einen Bolzen 64, der auf dem Nabengegenstück 52 angeordnet ist. Die Achsen der Leiste 65 und des Bolzens 64 sind parallel und gegenüber den Achsen der zentralen Bolzen 49, 49' um ca. 10° geneigt.

Der angetriebene äußere Teil der Schnecke 12 treibt über die Klauenkupplung 37 den mittleren Teil der Welle 11 an. Diese treibt ihrerseits über eine weitere Kupplung den anderen seitlichen Teil der Schnecke an. Die Drehrichtung ist jeweils so gewählt, daß sich durch die axiale Winkelstellung der Klauen bei Belastung immer eine die Wellenteile zusammenfügende Kraft ergibt. Dadurch, daß beide Kupplungsteile nur je eine Klaue aufweisen, bleiben die Winkelstellungen, der eingängigen Schneckenteile zueinander erhalten.

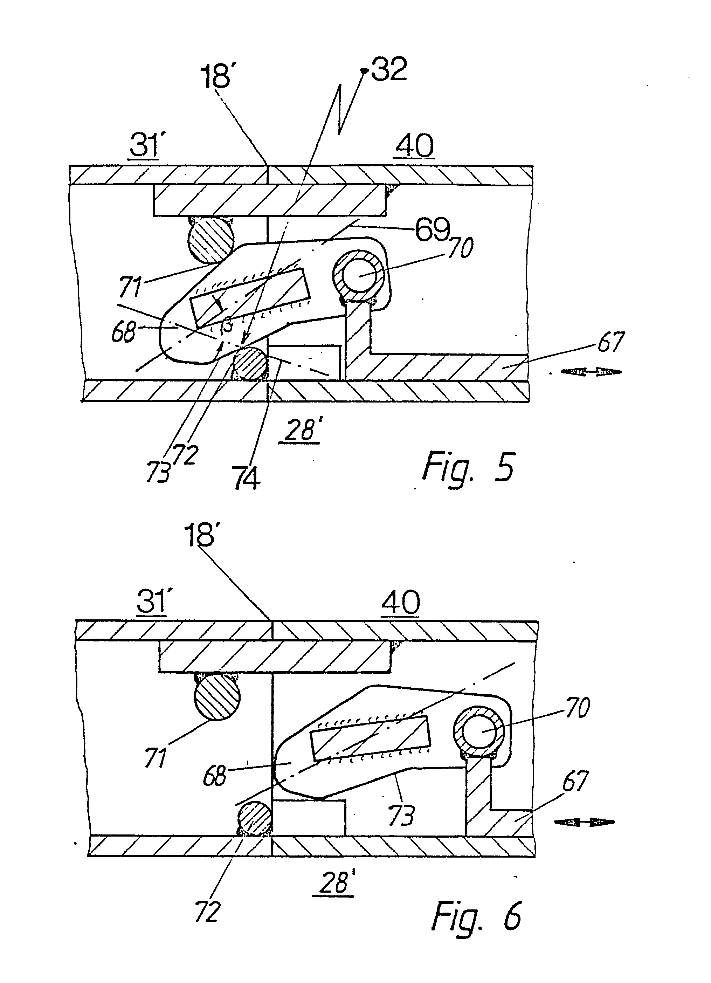

Fig. 5 und 6 zeigen jeweils denselben Verriegelungsmechanismus in unterschiedlichen Funktionsstellungen. Fig. 5 stellt die verriegelnde Position dar, während Fig. 6 die entriegelte Position darstellt.

In Fig. 5 bedeutet 18' die Trennstelle zwischen dem mittleren Maschinenrahmen 40 und dem Seitenteil 31'. Ein unbeabsichtigtes Trennen verhindert der Verriegelungsmechanismus 28', der im wesentlichen aus dem Keil 68, der Betätigungsstange 67 und der Führungsfläche 71 sowie der Verriegelungsfläche 72 besteht.

Wird die Betätigungsstange 67 von einem nicht gezeichneten Antrieb bekannter Konstruktion, z.B. hydraulisch, in die in Fig. 5 gezeigte Position geschoben, so neigt sich gleichzeitig mit diesem Bewegungsvorgang die Keilachse 69 des Keils 68, geführt durch die Fläche 71, in die dargestellte Lage. Der gesamte Keil schwenkt dabei um die Achse des Bolzens 70, über die der Keil mit der Betätigungsstange 67 verbunden ist. In dieser Lage wird die Keilfläche 73 auf die Verriegelungsfläche 72 gedrückt. Da die Ebene der Fläche 73 gegenüber einer im Berührungspunkt der Flächen 72 und 73 gedachten Tangenten an den Kreis um die nicht dargestellte Schwenkachse 14' des Seitenteils 31' geneigt ist, hält der Keil 68 das Seitenteil in dieser Position spielfrei und sicher fest. Die auf diese Weise verkeilte Trennstelle 18' läßt sich wieder lösen, indem der Keil in die in Fig. 6 dargestellte Lage gefahren wird. Der Keil 68 schwenkt dabei um den Bolzen 70 und gleitet auf der Fläche 72 solange zurück, bis er auf dem Stützteil im Maschinenrahmen ruht. Die Trennstelle ist frei und das Seitenteil 31' kann geklappt werden.

In Fig. 7 ist eine gegenüber Fig. 2 anders geartete, bevorzugte Anlenkung der die Trennstelle überdeckende Einlaufspitze 8' gezeigt. Hier ist die Einlaufspitze mit ihrer äußeren unteren Längskante 29 mit dem klappbaren Seitenteil 31' über das Gelenk 30 verbunden. Im hochgeklappten Zustand des Seitenteils 31' hängt die Einlaufspitze 8' an dem Gelenk 30 frei herunter. Wird das Seitenteil 31' in die Betriebsposition geschwenkt, so trifft die nicht angelenkte Seite auf die Gleitführung 66, die die Einlaufspitze beim Absenken in die gewünschte Lage führt. Diese bevorzugte Ausführung ergibt insgesamt einen sehr unkomplizierten und übersichtlichen Klapp-Mechanismus sowohl für die Seitenteile 31, 31' als auch für die klappbaren Einlaufspitzen 8, 8'.

**Patentansprüche**

1. Maiserntemaschine mit einem vorn an der Maschine befestigten mehrteiligen Erntemaschineneneinsatz (3) mit freitragenden, mitsamt der an ihnen befestigten Erntevorrichtung einklappbaren Seitenteilen (31, 31'), gekennzeichnet durch einen dreiteiligen Maschinenrahmen (4) mit einem feststehenden, Plückspalte (5) aufweisenden Mittelteil (40) und zwei klappbaren, Pflückspalte (5', 5'') aufweisenden Seitenteilen (31, 31'), die je durch einen höherliegenden Tragarm (17, 17') gehalten sind, wobei die zum Mittelteil (40) hin orientierten Tragarmenden mit dem Mittelteil (40) durch Gelenke (14, 14') verbunden sind, die in Höhe der Maschinen-Oberseite (41) am Mittelteil (40) angeordnet sind und deren Schwenkachse (32) in Arbeitsrichtung ausgerichtet gegenüber der Lage der Trennstelle (18, 18') der Seitenteile vom Mittelteil zur Maschinenmitte hin versetzt angeordnet sind.

2. Maiserntemaschine nach Anspruch 1, dadurch gekennzeichnet, daß der Tragarm (17, 17') in einer am Maschinenrahmen (4) befestigten Hülse (15') mit einem darin geführten Bolzen (16) schwenkbar aufgenommen ist.

3. Maiserntemaschine nach Anspruch 1 oder 2, dadurch gekennzeichnet, daß die Seitenteile (31, 31') als tragende Elemente im wesentlichen den mit dem Gelenk (14, 14') verbundenen Tragarm (17, 17') und einen weiteren zu diesem parallelen, vorzugsweise darunter liegenden Tragarm (20') und ein äußeres Seitenteil (62') aufweisen, das die Tragarme (17, 17') an der dem Gelenk (14, 14') gegenüberliegenden Seite verbindet.

4. Maiserntemaschine nach Anspruch 1, 2 oder 3, dadurch gekennzeichnet, daß sie zum Klappen der Seitenteile (31, 31') Antriebe (21, 21') aufweist, die einerseits an den Tragarmen (17, 17') und andererseits am Mittelteil (40) des Maschinenrahmens (4) angelenkt sind.

5. Maiserntemaschine nach Anspruch 4, dadurch gekennzeichnet, daß die Antriebe Hydraulik-Kolben/Zylinder Einheiten (21, 21') sind.

6. Maiserntemaschine wenigstens nach Anspruch 1, dadurch gekennzeichnet, daß sie zum Transport des Maisgutes eine Schnecke (10) mit Mittenabwurf aufweist, die getrennt ist und an den Trennstellen (18, 18') in einen mittleren (11) und zwei seitliche (12, 12') Schneckenteile geteilt ist.

7. Maiserntemaschine nach Anspruch 6, dadurch gekennzeichnet, daß ein seitliches Schneckenteil (12) mit einem Antrieb, vorzugsweise einem außenliegenden Kettenantrieb, zu einer Vorgelegewelle (23) versehen ist und das mittlere Schneckenteil (11) sowie das andere seitliche Schneckenteil (12') in Arbeitsstellung über Klauenkupplungen (37, 37') mit antreibt.

8. Maiserntemaschine wenigstens nach Anspruch 1, dadurch gekennzeichnet, daß die als Einugswalzen ausgebildete Erntevorrichtung (6) von einer Vorgelegewelle (22) über Nebenantriebe (25) angetrieben sind, wobei die Vorgelegewelle (22) im Bereich der Trennstellen (18, 18') geteilt ist, und die Wellenteile (23, 24) in Arbeitsstellung über Klauenkupplungen (26, 26') miteinander im Eingriff stehen.

9. Maiserntemaschine nach Anspruch 7 oder 8, dadurch gekennzeichnet, daß die Anzahl der die Klauenkupplung bildenden, exzentrisch angeordneten Antriebsklauen (65) und exzentrisch angeordneten Antriebsklauen (64) gleich der Gangzahl der Schnecke (10) ist, z.B. bei einer eingängigen Schnecke je Kupplungshälfte eine Klaue aufweist.

10. Maiserntemaschine nach Anspruch 7, 8 oder 9, dadurch gekennzeichnet, daß die Klauen als zur Achse geneigte Bolzen ausgebildet sind, die insbesondere unter einem Winkel α von etwa 10° zur Längsachse angeordnet sind, so daß sich unter Belastung eine die Wellenteile zusammenfügende Kraft einstellt.

11. Maiserntemaschine wenigstens nach Anspruch 1, dadurch gekennzeichnet, daß der Maschinenrahmen zu beiden Seiten je einen, die Trennstelle (18, 18') sichernden, Riegel (28, 28') aufweist.

12. Maiserntemaschine nach Anspruch 11, dadurch gekennzeichnet, daß der Riegel (28, 28') an einer, vorzugsweise motorisch angetriebenen, axialbeweglichen Stange (67) einen schwenkbeweglich angelenkten Keil (68) aufweist.

13. Maiserntemaschine wenigstens nach Anspruch 1, dadurch gekennzeichnet, daß das Seitenteil (31, 31') eine Verriegelungsfläche (72) aufweist, auf die der Keil (68) geführt von einer zweiten Fläche (71) gepreßt wird.

14. Maiserntemaschine wenigstens nach Anspruch 1, dadurch gekennzeichnet, daß die verriegelnde Fläche (73) des Keils (68) eine Neigung β zur Tangente (74) eines im Berührungspunkt um die Schwenkachse (32) des Seitenteils gedachten Kreises aufweist.

15. Maiserntemaschine wenigstens nach Anspruch 1, dadurch gekennzeichnet, daß die die Trennstellen (18, 18') überdeckende Einlaufspitze (8, 8') mit der äußeren Längskante (29) in Scharnieren (30) an dem Seitenteil (31, 31') angelenkt ist.

16. Maiserntemaschine nach einem oder mehreren der vorhergehenden Ansprüche, dadurch gekennzeichnet, daß bei einer mit Unterbau-Strohhäckslern (34) ausgerüsteten Maschine (1), die Antriebe dieser Unterbau-Strohhäcksler vorzugsweise über Nebenantriebsaggregate (35) von der Vorgelegewelle (22) angetrieben sind.

17. Maiserntemaschine nach einem oder mehreren der vorhergehenden Ansprüche, dadurch gekennzeichnet, daß die Maschine sechs Pflückspalte (5, 5', 5'') aufweist, von denen vier am Mittelteil und je einer an den klappbaren Seitenteilen (31, 31') angeordnet sind.

18. Maiserntemaschine nach einem oder mehreren der vorhergehenden Ansprüche, dadurch gekennzeichnet, daß zur Bedienung der Klapp-Antriebe (21, 21') in der Fahrerkabine (13) ein Schalter, vorzugsweise ein Druckknopfschalter, angeordnet ist.

**Claims**

1. Maize harvesting machine having a multi-part harvesting machine attachment (3) fastened to the front of the machine with cantilevered side parts (31, 31') which can be folded in together with the harvesting implement fastened to them, characterized by a three-part machine frame (4) with a stationary central part (40), having picking gaps (5), and two foldable side parts (31, 31'), having picking gaps (5', 5''), which side parts are held by a higher-lying supporting arm (17, 17'), the supporting arm ends oriented towards the central part (40) being connected to the central part (40) by joints (14, 14'), which are arranged on the level of the machine upper side (41) on the central part (40) and the pivot axes (32) of which, aligned in working direction, are arranged offset towards the machine centre with respect to the position of the separating point (18, 18') of the side parts from the central part.

2. Maize harvesting machine according to Claim 1, characterized in that the supporting arm (17, 17') is pivotably accommodated in a sleeve (15') fastened to the machine frame (4) with a bolt (16) guided in it.

3. Maize harvesting machine according to Claim 1 or 2, characterized in that the side parts (31, 31'), as supporting elements, essentially have the supporting arm (17, 17'), connected to the joint (14, 14'), and a further supporting arm (20'), lying parallel to the first arm, preferably underneath, and an outer side part (62'), which connects the supporting arms (17, 17') on the side opposite the joint (14, 14').

4. Maize harvesting machine according to Claim 1, 2 or 3, characterized in that, for the folding of the side parts (31, 31'), it has drives (21, 21') which are articulated on the one hand on the supporting arms (17, 17') and on the other hand on the central part (40) of the machine frame (4).

5. Maize harvesting machine according to Claim 4, characterized in that the drives are hydraulic piston/cylinder units (21, 21').

6. Maize harvesting machine at least according to Claim 1, characterized in that, for the transport of the maize product, it has a screw (10) with central discharge, which is separate and is divided at the separating points (18, 18') into a central screw part (11) and two lateral screw parts (12, 12').

7. Maize harvesting machine according to Claim 6, characterized in that a lateral screw part (12) is provided with a drive, preferably an outer-lying chain drive, to a countershaft (23) and drives with it the central screw part (11) and other lateral screw part (12') in working position via claw couplings (37, 37').

8. Maize harvesting machine at least according to Claim 1, characterized in that the harvesting implement designed as draw-in rollers (6) is driven by a counter-shaft (22) via auxiliary drives (25), the countershaft (22) being divided in the region of the separating points (18, 18'), and the shaft parts (23, 24) being in engagement with each other in working position via claw couplings (26, 26').

9. Maize harvesting machine according to Claim 7 or 8, characterized in that the number of eccentrically arranged input claws (65) and eccentrically arranged output claws (64) forming the claw coupling is the same as the number of starts of the screw (10), for example with a single-start screw each coupling half has one claw.

10. Maize harvesting machine according to Claim 7, 8 or 9, characterized in that the claws are designed as bolts inclined to the axis which are arranged in particular at an angle α of approximately 10° to the longitudinal axis, so that a force fitting together the shaft parts is established under loading.

11. Maize harvesting machine at least according to Claim 1, characterized in that the machine frame has on each of both sides a bar (28, 28') securing the separating point (18, 18').

12. Maize harvesting machine according to Claim 11, characterized in that the bar (28, 28') has on a, preferably motor-driven, axially movable rod (67) a pivotally articulated key (68).

13. Maize harvesting machine at least according to Claim 1, characterized in that the side part (31, 31') has a locking face (72), onto which the key (68) is pressed, guided by a second face (71).

14. Maize harvesting machine at least according to Claim 1, characterized in that the locking face (73) of the key (68) has an inclination β to the tangent (74) of a circle imagined at the point of contact around the pivot axis (32) of the side part.

15. Maize harvesting machine at least according to Claim 1, characterized in that the entry funnel (8, 8'), covering the separating points (18, 18') is articulated with the outer longitudinal edge (29) in hinges (30) on the side part (31, 31').

16. Maize harvesting machine according to one or more of the preceding claims, characterized in that, in the case of a machine (1) equipped with underslung chaff cutters (34), the drives of these underslung chaff cutters are preferably driven via auxiliary drive units (35) by the countershaft (22).

17. Maize harvesting machine according to one or more of the preceding claims, characterized in that the machine has six picking gaps (5, 5', 5''), of which four are arranged on the central part and one is arranged on each of the foldable side parts (31, 31').

18. Maize harvesting machine according to one or more of the preceding claims, characterized in that a switch, preferably a push button switch, is arranged in the driver's cab (13) for the operation of the fold-drives (21, 21').

**Revendications**

1. Moissonneuse à maïs, comprenant un cueilleur (3) en plusieurs pièces, fixé à la machine en position frontale et qui comporte des parties latérales (31, 31'), disposées en porte-à-faux, et qui peuvent être rabattues vers l'intérieur avec le cueilleur fixé à ces parties, caractérisée par un bâti de machine (4) en trois pièces, qui comprend une partie centrale (40) fixe et qui présente des fentes cueilleuses (5), et deux parties latérales (31, 31') rabattables et présentent des fentes cueilleuses (5, 5'), qui sont tenues chacunes par un bras porteur (17, 17') placé plus haut, les extrémités des bras porteurs qui sont orientées vers la partie centrale (40) étant reliées à la partie centrale (40) par des articulations (14, 14') qui sont disposées sur la partie centrale (40) au niveau de la face supérieure (41) de la machine, et dont les axes d'articulation (32), orientés dans la direction du travail sont déportés vers le milieu de la machine par rapport à la position des coupures (18, 18') séparant les parties latérales de la partie centrale.

2. Moissonneuse à maïs selon la revendication 1, caractérisée en ce que le bras porteur (17, 17') est monté basculant dans une douille (15') fixée au bâti (4) de la machine et dans laquelle est enfilée une broche (16).

3. Moissonneuse à maïs selon la revendication 1 ou 2, caractérisée en ce que les parties latérales (31, 31') présentent comme éléments porteurs, essentiellement le bras porteur (17, 17') relié à l'articulation (14, 14'), et un autre bras porteur (20'), parallèle au premier, de préférence placé au-dessous, et une partie latérale extérieure (62') qui relie les bras porteurs (17, 17') au côté qui est à l'opposé de l'articulation (14, 14').

4. Moissonneuse à maïs selon l'une des revendications 1, 2 ou 3, caractérisée en ce qu'elle présente, pour le rabattement des parties latérales (31, 31'), des entraînements (21, 21') qui sont articulés, d'une part, sur le bras porteur (17, 17') et, d'autre part, sur la partie centrale (40) du châssis (4) de la machine.

5. Moissonneuse à maïs selon la revendication 4, caractérisée en ce que les entraînements sont des unités hydrauliques à piston-cylindre (21, 21').

6. Moissonneuse à maïs au moins selon la revendication 1, caractérisée en ce qu'elle présente, pour l'amenage du maïs, une vis (10) à déversement central, qui est séparée et divisée, au niveau des coupures (18, 18'), en une partie de vis centrale (11) et deux parties de vis latérales (12, 12').

7. Moissonneuse à maïs selon la revendication 6, caractérisée en ce qu'une partie latérale (12) de la vis est munie d'un entraînement, de préférence, d'un entraînement à chaîne placé à l'extérieur, pour constituer un arbre intermédiaire (23), et entraîne dans son mouvement la partie centrale (11) de la vis, ainsi que l'autre partie latérale (12') de la vis, en position de travail, par l'intermédiaire d'accouplements à crabots (37, 37').

8. Moissonneuse à maïs selon au moins la revendication 1, caractérisée en ce que le dispositif cueilleur (6), constitué par des rouleaux cueilleurs, est entraîné par un arbre intermédiaire (22) par l'intermédiaire d'entraînements secondaires (25), l'arbre intermédiaire (22) étant divisé dans la région des coupures (18, 18') et les parties d'arbre (23, 24) étant en prise entre eux dans la position de travail par l'intermédiaire d'accouplements à crabots (26, 26').

9. Moissonneuse à maïs selon la revendication 7 ou 8, caractérisée en ce que le nombre des crabots d'entrée (65) qui forment l'accouplement à crabots, et qui sont disposés excentriquement, et des crabots de sortie (64) disposés excentriquement est égal au nombre de filets de la vis (10), par exemple, dans le cas d'une vis à un seul filet, chaque demi-accouplement présentant un crabot.

10. Moissonneuse à maïs selon l'une des revendications 7, 8 ou 9, caractérisée en ce que les crabots sont constitués par des barres inclinées sur l'axe, qui sont disposées en particulier en formant un angle α d'environ 10° par rapport à l'axe longitudinal, de sorte que, sous charge, il s'exerce une force qui tend à assembler les parties de l'arbre.

11. Moissonneuse à maïs au moins selon la revendication 1, caractérisée en ce que le bâti de la machine présente sur chaque côté un verrou (28, 28') qui bloque la coupure (18, 18').

12. Moissonneuse à maïs selon la revendication 11, caractérisée en ce que le verrou (28, 28') présente un coin pivotant (68) articulé sur une barre (67), de préférence entraînée par un moteur, mobile dans la direction axiale.

13. Moissonneuse à maïs au moins selon la revendication 1, caractérisée en ce que la partie latérale (31, 31') présente une surface de verrouillage (72), sur laquelle le coin (68) est pressé en étant guidé par une deuxième surface (71).

14. Moissonneuse à maïs au moins selon la revendication 1, caractérisée en ce que la surface de verrouillage (73) de la clavette (68) présente une inclinaison β sur la tangente (74) à un cercle imaginaire centré sur l'axe de rabattement (32) de la partie latérale, au point de contact.

15. Moissonneuse à maïs au moins selon la revendication 1, caractérisée en ce que le diviseur (8, 8') qui recouvre les coupures (18, 18') est articulé sur la partie latérale (31, 31') par son bord longitudinal extérieur (29), à l'aide de charnières (30).

16. Moissonneuse à maïs selon une ou plusieurs des revendications précédentes, caractérisée en ce que, dans le cas d'une machine (1) équipée de broyeurs à paille sous châssis (34), les entraînements de ces broyeurs à paille sous châssis sont de préférence entraînés par l'arbre intermédiaire (22), par l'intermédiaire de groupes d'entraînement.

17. Moissonneuse à maïs selon une ou plusieurs des revendications précédentes, caractérisée en ce que la machine présente six fentes de cueillage (5, 5', 5'') dont quatre sont agencées sur la partie centrale et une sur chacune des parties latérales rabattables (31, 31').

18. Moissonneuse à maïs selon une ou plusieurs des revendications précédentes, caractérisée en ce que, pour la manœuvre des entraînements de rabattement (21, 21'), il est prévu un interrupteur, de préférence un interrupteur à bouton-poussoir, dans la cabine (13) du conducteur.

Fig. 1

Fig. 1a

EP 0 131 853 B1

*Fig. 1 b*

43

9'

42

57' 41

54

2

38

9"

42

53

4

43

42

56 10 55

9

43

38

Fig. 2

*Fig. 3*

Fig. 4

31

49'

63'

46'

47'

48'

48'

65

51

37

47

64

48

18

12

52

46

11

63

40

49

10

21

Fig. 5

Fig. 6

Fig. 7

25